# EUROPÄISCHE PATENTSCHRIFT

(11) **EP 0 368 940 B1**
(45) Veröffentlichungstag und Bekanntmachung des Hinweises auf die Patenterteilung: **13.10.1993**
(21) Anmeldenummer: 89900810.6
(22) Anmeldetag: 07.12.1988
(51) Int. Cl.: H02K 1/18

(54) **ELEKTROMOTOR**
ELECTRIC MOTOR
MOTEUR ELECTRIQUE

(30) Priorität: 10.12.1987 DE 8716288 U
(43) Veröffentlichungstag der Anmeldung: 23.05.1990
(73) Patentinhaber: PAPST-MOTOREN GmbH & Co. KG, 78106 St Georgen (DE)
(72) Erfinder: WROBEL, Günter, D-7730 Villingen-Schwenningen (DE)
(74) Vertreter: Henkel, Feiler, Hänzel & Partner
(86) Internationale Anmeldenummer: EP8801115
(87) Internationale Veröffentlichungsnummer: WO8905537

(56) Entgegenhaltungen:
- EP-A- 0 149 228
- DE-A- 2 727 379
- FR-A- 2 536 222
- US-A- 1 467 938
- US-A- 4 682 065
- Patent Abstracts of Japan, Band 3, Nr. 159 (E-162), 27. Dezember 1979 & JP, A, 54140102 (HITACHI) 31. Oktober 1979

## Beschreibung

Die Erfindung betrifft einen Elektromotor nach dem Oberbegriff des Patentanspruches 1.

Die Statoren derartiger Elektromotoren sind in der Regel auf einem Lagertragteil aufgeklebt. Vor dem Aushärten des Klebers muß der Stator ausgerichtet werden, und er muß in dieser Stellung bis zur Aushärtung bleiben. Das Dosieren des Klebers muß relativ genau vorgenommen werden, da wegen des geringen Spieles zwischen dem Innendurchmesser des Statoreisens und dem Außenmantel des Lagertragteils nur eine geringe Menge hiervon benötigt wird. Ein Hauptnachteil des Klebers ist, daß der Kleber-Auftrag beim Aufschieben beispielsweise des Lagertragteils weggedrückt wird, so daß keine dosierte Klebermenge zurückbleibt.

Ein Elektromotor der eingangs genannten Art ist aus der US-A-4 682 065 bekannt. Dieser Elektromotor hat also einen Befestigungsflansch und einen Lagerteil aus Kunststoff, dessen Stator auf dem Außendurchmesser des Lagerteils befestigt ist.

Weiterhin ist es aus der US-A-1 467 938 bekannt, zur Verbindung eines Blechpakets mit einer Motorachse eine Zahnscheibe aus Metall mit radial nach innen ragenden Vorsprüngen vorzusehen, welche das Blechpaket an einem Vorsprung anliegend haltern.

Aus der FR-A-2 536 222 ist ein Motor bekannt, bei dem die Statorbleche selbst mit radial nach innen ragenden Vorsprüngen versehen sind, um deren feste Verbindung mit dem Stator herzustellen.

Schließlich kann der JP-A-54 140 102 ein Außenläufermotor entnommen werden, bei dem das Statoreisen auf wellenförmigen Rippen angebracht ist.

Der Erfindung liegt die Aufgabe zugrunde, die Montage des Stators auf dem Lagertragteil zu vereinfachen, also die Nachteile, die durch das Verkleben entstehen, zu beseitigen und gleichzeitig die Kosten für die Herstellung von Elektromotoren beispielsweise durch sehr einfache Montage zu senken.

Diese Aufgabe wird bei einem Elektromotor der eingangs genannten Art erfindungsgemäß durch die im kennzeichnenden Teil des Patentanspruches 1 angegeben Merkmale gelöst.

Durch einfaches axiales Aufpressen bzw. Aufdrücken werden durch den bei der Erfindung vorgesehenen Aufbau des Stators gleichzeitig die Befestigung und die Ausrichtung des Stators am Lagertragteil erreicht.

Das bei der Erfindung vorgesehene Befestigungsmittel ist eine einfache Zahnscheibe, die aus einem Bandstahl hergestellt ist Die äquidistant angeordneten Zähne der Zahnscheibe aus dünnem Federstahl oder Bandstahl oder Kupfer (hart), das dünn, federnd und hart ist, werden beim Aufpressen des Stators auf das Lagertragteil abgebogen und verhaken sich durch eine Restfederwirkung im Kunststoff des Lagertragteils. Wegen der gewählten Blechstärke von beispielsweise ca. 0,2 mm müssen die Zähne nicht vorgebogen und dann montiert werden.

Mindestens eine über den Außenrand der Zahnscheibe hinausragende Zunge fixiert diese in eine montagegerechte Lage. Wegen des Wickeldorns sollten die Zähne immer die gleiche Stellung haben.

Eine Nut in axialer Richtung in der Innenbohrung des Statoreisens dient in Verbindung mit einem axial auf dem Außenmantel des Lagertragteils verlaufenden axialen Nocken als Verdrehsicherung.

Zur radialen Ausrichtung und besseren Zentrierung sind auf dem Außenmantel des Lagertragteiles mindestens drei über dem Umfang etwa gleichmäßig verteilte Rippen angespritzt, die achsparallel zur Innenbohrung des Lagertragteils verlaufen.

Die Zahnscheibe ist zwischen Statoreisen und Wicklungsendscheibe eingelegt und wird durch die Bewicklung des Stators und damit auch der Wicklungsendscheiben festgehalten. Gleichzeitig ist sie zum Wicklungsdraht hin isoliert.

Ein axial kurzer Bereich kleineren Durchmessers des Außenmantels am flanschabseitigen Ende des Lagertragteils erleichtert die Montage bzw. schafft Platz für das Hochstellen der Zähne.

Weitere Einzelheiten und vorteilhafte Weiterbildungen der Erfindung ergeben sich aus der nachfolgenden Beschreibung der in den Zeichnungen dargestellten Ausführungsbeispiele.

Es zeigen:
- Fig. 1: einen bekannten Elektromotor im Schnitt,
- Fig. 2: einen nach der Erfindung montierten Stator für einen Elektromotor gemäß Fig. 1 im Schnitt,
- Fig. 3: ein bei der Erfindung verwendetes Befestigungselement in Draufsicht,
- Fig. 4: einen in einen Axialventilator eingebauten erfindungsgemäßen Elektromotor mit einem montierten Stator im Schnitt und
- Fig. 5: eine halbe Draufsicht auf einen Axialventilator ohne Rotor.

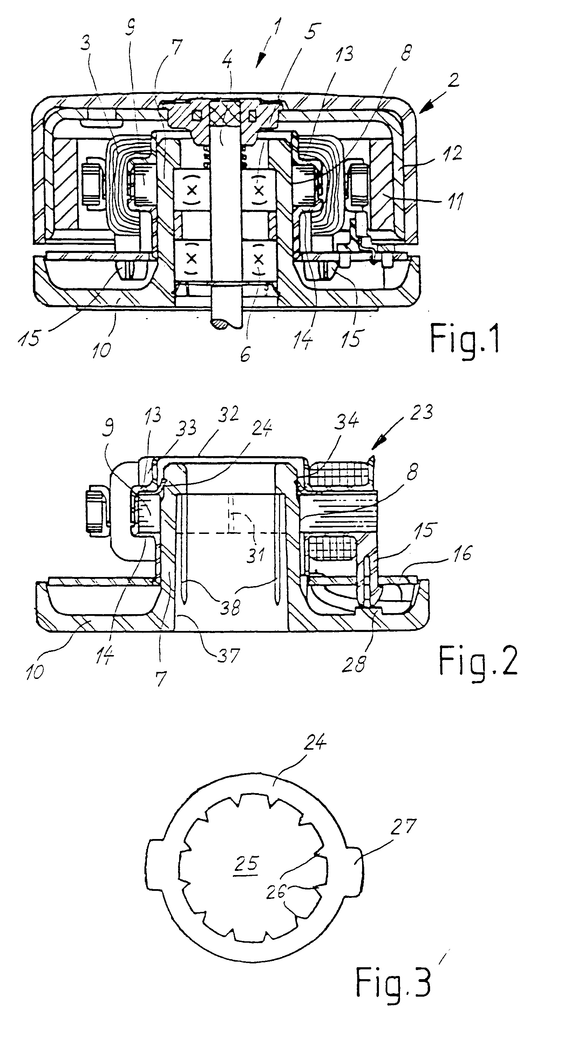

Fig. 1 zeigt einen bekannten Elektromotor 1, der aus einem Rotor 2 und einem Stator 3 besteht. Eine Welle 4 ist in Lagern 5, 6 gelagert.

In allen Ausführungsbeispielen sind Kugellager dargestellt, die in einem Lagertragteil 7 aus Kunststoff oder weichem Metall (Druckguß) befestigt sind. Es können aber auch Gleitlager eingesetzt werden. Auf einem Außenmantel 8 des Lagertragteils 7 ist ein Statoreisen 9 des Stators 3 aufgeklebt. Ein Befestigungsflansch 10 dient zur Befestigung des Elektromotors 1. Im dargestellten Beispiel sind das Lagertragteil 7 und der Befestigungsflansch 10 als einteiliges Kunststoffspritzteil ausgeführt. Der topfförmige Rotor 2 des hier gezeigten kollektorlosen Gleichstrommotors besteht im wesentlichen aus einem Permanentmagneten 11 und einen Rückflußtopf 12, in dessen Topfboden ein Ende der Welle 4 konzentrisch festgemacht ist. Das Statoreisen 9, das als Blechpaket ausgebildet ist, wird auf beiden Seiten (axial gesehen) durch je eine Wicklungsendscheibe 13, 14 aus Kunststoff abgedeckt. Die untere Endscheibe 14 enthält noch mindestens drei geschlitzte Stützen 15, die etwa achsparallel angeordnet sind. Die Stützen 15 dienen u.a. der Befestigung einer Leiterplatte 16, die die Steuerelektronik für den Betrieb des Elektromotors 1 enthält.

Fig. 2 zeigt einen Stator 23, der im wesentlichen dem in Fig. 1 dargestellten Stator 3 entspricht, weshalb auch gleiche bzw. gleichwirkende Teile mit denselben Bezugsziffern versehen sind. Der wesentliche Unterschied liegt in den Mitteln zur Befestigung des Statoreisens 9 auf dem Außenmantel 8 des Lagertragteils 7. Eine Zahnscheibe 24 aus dünnem Federstahl oder Bandstahl mit einer Blechstärke von etwa 0,1 bis 0,3 mm mit zentrischer Bohrung 25, an deren Innenrand mindestens drei radial zur Bohrungsmitte gerichtete spitze Zähne 26 angeordnet sind. Mindestens eine (im vorliegenden Beispiel zwei Zungen) Zunge 27 dient zur Fixierung der Zahnscheibe 24. Sie ragt zwischen die zusammengesteckten Wicklungsendscheiben 13, 14. Die Bohrung 25 hat einen etwa größeren Durchmesser als der Außenmantel 8 des Lagertragteils 7, während die Zähne 26 äquidistant am Innenrand verteilt radial nach innen ragen.

Beim Zusammenbau der Statorteile wird zunächst die Zahnscheibe 24 auf das eine Ende des Statoreisens 9 gelegt, die obere Wicklungsendscheibe 13 darübergesteckt und die untere Wicklungsendscheibe 14 vom anderen Ende des Statoreisens 9 her durch Schiebesitz mit der oberen Endscheibe 13 miteinander verbunden. Dann wird der Stator 23 bewickelt. Durch das Bewickeln werden die beiden Endscheiben 13, 14 und die mittels der Endscheiben 13, 14 fixierte Zahnscheibe 24 fest miteinander verbunden. Der so montierte Stator 23 wird mit leichtem Druck über den Außenmantel 8 des Lagertragteils 7 geschoben, bis die unteren Enden der Stützen 15 an entsprechenden Anschlagflächen 28 des Flansches 10 anliegen.

Der Druck wird auf den oberen Rand 32 der oberen Endscheibe 13 ausgeübt. Zur Verstärkung sind an diesem Rand 32 mindestens drei Rippen 33 zur Versteifung angespritzt. Beim Aufschieben des Stators 23 werden die Zähne 26 der Zahnscheibe 24, die vorzugsweise aus 0,2 mm dickem Federstahl oder Bandstahl besteht, weggebogen und graben sich nach beendetem Einpreßvorgang in den Außenmantel 8 des Lagertragteils 7 aus Kunststoff oder weichem Metall durch die beim Abbiegen entstandene Rückfederwirkung ein. Diese einfache und sichere Befestigung für einen Stator auf ein Tragteil ist nicht auf Tragteile 7 aus Kunststoff beschränkt, sondern sie läßt sich überall anwenden, wo das Tragteil 7 aus einem weicheren Werkstoff besteht als die Zahnscheibe 24, d.h. aus einem Werkstoff, in den die Zahnscheibe mindestens geringfügig eindringen kann. Beispiele für solche Werkstoffe sind Zamak oder Aluminium.

Es entsteht von oben her ein axialer Druck, der auf den inneren Durchmesserbereich des Blechpakets des Statoreisens 9 wirkt. Der Gegendruck von unten her erfolgt am äußeren Durchmesserbereich des Blechpakets des Statoreisens 9 durch das Anliegen der Stützen an den Anschlagflächen 28. Die Rückfederkraft des am inneren Durchmesserbereich geringfügig nach unten gebogenen Blechpakets des Statoreisens 9 versucht wieder in eine Ausgangslage zu kommen und drückt dadurch die Zähne 26 der Scheibe 24 zusätzlich im wesentlichen in axialer Richtung in den Außenmantel 8 und verhindert so jegliches axiales Spiel.

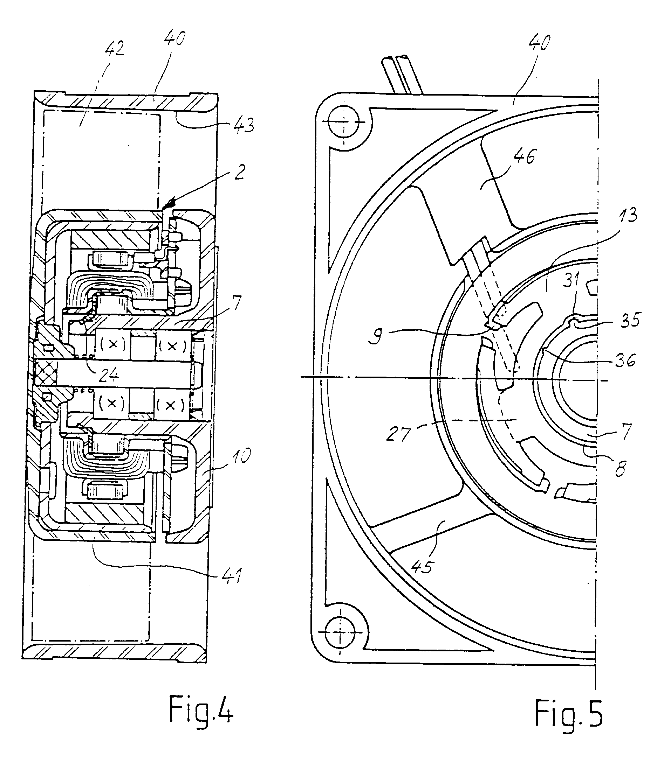

Zur Vereinfachung der Montage weist der Außenmantel 8 des Lagertragteiles 7 an seinem oberen Ende (auf Darstellung in Fig. 2 bezogen), d.h. flanschabseitig, einen axial kurzen Bereich 34 kleineren Durchmessers auf. Dadurch läßt sich der Stator 23 ohne zu verkanten mühelos aufsetzen und anschließend auf den paßgenauen Außenmantelteil des Lagertragteiles 7 aufschieben. Zur umfangsmäßigen Fixierung und zur Verdrehsicherung sind in der Innenbohrung des Statoreisens 9 eine axial verlaufende Nut 31 und auf dem Außenmantel 8 ein entsprechend angepaßter axialer Nocken 35 (Fig. 5) angebracht.

Der kurze Bereich 34 kleineren Durchmessers am Außenmantel 8 des Lagertragteils 7 kann aber entfallen, wenn der Spielraum zwischen dem Innendurchmesser der Endscheibe 13 und dem Durchmesser des Außenmantels 8 groß genug ist, um das Umbiegen der Zähne 26 der Zahnscheibe zu gewährleisten.

Die durch die Fertigung bedingte geringe Konizität des Außenmantels 8 des Lagertragteiles 7 wird durch mindestens drei am Umfang verteilte angespritzte achsparallele Rippen 36 (Fig. 5) beseitigt. Dadurch werden die Zentrierung und die Ausrichtung des Stators 2, 23 gegenüber der Lagerbohrung 37 weiter verbessert. Auch an der Wandung der fertigungsbedingt konischen Lagerbohrung 37 sind achsparallele Rippen 38 angespritzt, die die einzusetzenden Lager 5, 6 zentrieren.

Fig. 4 und 5 zeigen ein typisches Anwendungsbeispiel für Elektromotoren gemäß der Erfindung. Der dargestellte Axialventilator besteht aus einem aus Kunststoff gespritzten Gehäuse 40, das einteilig den Flansch 10, Stege 45, 46 und das Lagertragteil 7 enthält. Auf dem Rotor 2 ist ein Ventilatorrad 41 mit Flügeln 42 aufgebracht, die den Luftstrom durch einen Strömungskanal 43 fördern. Solche Ventilatoren sind sehr kompakt (die Darstellung in diesen Fig. 4, 5 ist etwa in doppelter Größe wie der Gegenstand selbst ausgeführt) und als Massenprodukt auch einfach und preiswert. Der bisher durch Verklebung aufgebrachte Stator 3 wird durch den einfacher und sicherer aufzubringenden erfindungsgemäßen Stator 23 ersetzt. Dadurch wird eine weitere und für ein solches Massenprodukt wesentliche Verbilligung erreicht.
Beim Aufdrücken des Stators mit einer Kraft F1 am inneren Bereich des Blechpakets des Statoreisens 9 wird durch den Gegendruck mit der Kraft F2 das Blechpaket nach unten gebogen. Beim Rückfedern werden die Zähne 26 zusätzlich in den Außenmantel 8 gepreßt, wodurch jedes axiale Spiel beseitigt wird.

## Patentansprüche

1. Elektromotor mit einem Befestigungsflansch (10) und einem Lagertragteil (7) aus Kunststoff oder weichem Metall, dessen Stator (3) auf dem Außendurchmesser des Lagertragteils (7) befestigt ist,
dadurch **gekennzeichnet,** daß am flanschabseitigen Ende des Statoreisens (9) eine Zahnscheibe (24) aus Metall mit radial nach innen ragenden Vorsprüngen (26) angeordnet ist, welche am Lagertragteil (7) außen anliegend den Stator (23) haltern, und
die Zahnscheibe (24) mindestens eine über den Außenrand der Zahnscheibe hinausragende Zunge (27) aufweist.

2. Elektromotor nach Anspruch 1,
dadurch **gekennzeichnet,** daß die Zahnscheibe (24) aus Federstahl hergestellt ist und eine Dicke von etwa 0,1 bis 0,3 mm, vorzugsweise von etwa 0,2 mm aufweist.

3. Elektromotor nach Anspruch 1 oder Anspruch 2,
dadurch **gekennzeichnet,** daß die radial nach innen ragenden Vorsprünge der Zahnscheibe (24) als spitze Zähne (26) ausgebildet und äquidistant am Umfang verteilt sind.

4. Elektromotor nach einem der vorhergehenden Ansprüche,
dadurch **gekennzeichnet,** daß das Statoreisen (9) als Blechpaket ausgebildet ist, das in der Innenbohrung eine axial verlaufende Nut (31) aufweist.

5. Elektromotor nach einem der vorhergehenden Ansprüche,
dadurch **gekennzeichnet,** daß das Lagertragteil (7) auf seinem Außenmantel (8) einen axial verlaufenden Nocken (35) aufweist.

6. Elektromotor nach einem der vorhergehenden Ansprüche,
dadurch **gekennzeichnet,** daß auf dem Außenmantel (8) des Lagertragteils (7) mindestens drei axial verlaufende achsparallele Rippen (36) angeordnet sind.

7. Elektromotor nach einem der vorhergehenden Ansprüche,
dadurch **gekennzeichnet,** daß die Zahnscheibe (24) zwischen einer Wicklungsendscheibe (13) und dem Statoreisen (9) eingelegt und gehalten ist.

8. Elektromotor nach einem der vorhergehenden Ansprüche,
dadurch **gekennzeichnet,** daß das flanschabseitige Ende des Außenmantels (8) des Lagertragteils (7) einen axial kurzen Bereich (34) kleineren Durchmessers aufweist.

9. Elektromotor nach einem der vorhergehenden Ansprüche zur Verwendung als Antriebsmotor für einen Ventilator, insbesondere flachbauenden Axialventilator, dessen Gehäuse (40), Befestigungsflansch (10), Lagertragteil (7) und Stege (45, 46) aus Kunststoff bestehen,
dadurch **gekennzeichnet,** daß der Motor (1) mit einem auf seinem Rotor befestigten Ventilatorlaufrad (41) zentrisch in einem Strömungskanal (43) des Gehäuses (40) eingebaut ist.

## Claims

1. Electric motor with a fastening flange and a bearing support part made of plastic or of a soft metal, the stator of which is fastened on the outer diameter of the bearing support part, characterized in that at the end of the stator iron core (9) which is on the side away from the flange, a toothed disc (24) made of metal is arranged having radially inwardly extending projections (26) which, in external contact with the bearing support part (7), hold the stator (23), and in that the toothed disc (24) has a tongue (27) protruding beyond the outer edge of the toothed disc.

2. Electric motor according to claim 1, characterized in that the toothed disc (24) is made of spring steel and has a thickness of approximately 0.1 to 0.3 mm, preferably approximately 0.2 mm.

3. Electric motor according to either claim 1 or claim 2, characterized in that the radially inwardly extending projections of the toothed disc (24) are constructed as pointed teeth (26) and are equidistantly arranged on the periphery.

4. Electric motor according to one of the preceding claims, characterized in that the stator iron core (9) is constructed as a bundle of plates which has an axially extending groove (31) in the inside bore.

5. Electric motor according to one of the preceding claims, characterized in that the bearing support part (7) has an axially extending cam (35) on its outer surface (8).

6. Electric motor according to one of the preceding claims, characterized in that at least three axially extending axially parallel ribs (36) are arranged on the outer surface (8) of the bearing support part (7).

7. Electric motor according to one of the preceding claims, characterized in that the toothed disc (24) is positioned between a winding end plate (13) and the stator iron core (9).

8. Electric motor according to one of the preceding claims, characterized in that the end of the outer surface (8) of the bearing support part (7) which is on the side away from the flange has an axially short area (34) of smaller diameter.

9. Electric motor according to one of the preceding claims for use as a drive motor for a fan, particularly a flat-mounted axial fan, the housing (40), securing flange (10), bearing support part (7) and webs (45, 46) of which are made of plastic, characterized in that the motor (1), together with a fan impeller (41) secured on its rotor, is incorporated centrally in a flow duct (43) of the housing (40).

## Revendications

1. Moteur électrique ayant un flasque de fixation (10) et un support (7) de palier en matière plastique ou en métal mou, le stator (3) de ce moteur étant fixé sur le diamètre extérieur du support (7) du palier,
caractérisé en ce qu'il comporte, à l'endroit de l'extrémité du fer (9) du stator qui est opposée au flasque, un disque métallique denté (24) pourvu de saillies radiales (26) orientées vers l'intérieur, qui tiennent le stator (23) en étant en appui extérieurement contre le support (7) du palier,
et en ce que le disque denté (24) comporte au moins une languette (27) en saillie sur le bord externe de ce disque.

2. Moteur électrique selon la revendication 1,
caractérisé en ce que le disque denté (24) est confectionné en acier à ressort et présente une épaisseur d'environ 0,1 à 0,3 mm, cette épaisseur étant de préférence de 0,2 mm environ.

3. Moteur électrique selon la revendication 1 ou la revendication 2,
caractérisé en ce que les saillies orientées vers l'intérieur du disque denté (24) sont constituées par des dents aiguës (26) et sont réparties de manière équidistante sur le pourtour de ce disque.

4. Moteur électrique selon l'une des revendications précédentes,
caractérisé en ce que le fer (9) du stator est constitué par un paquet de tôles, qui présente dans son alésage interne une rainure (31) orientée axialement.

5. Moteur électrique selon l'une des revendications précédentes,
caractérisé en ce que le support (7) du palier comporte sur sa paroi externe (8) une nervure (35) orientée axialement.

6. Moteur électrique selon l'une des revendications précédentes,
caractérisé en ce qu'il comporte, sur la paroi externe (8) du support (7) du palier, au moins trois nervures (36) orientées parallèlement à l'axe.

7. Moteur électrique selon l'une des revendications précédentes,
caractérisé en ce que le disque denté (24) est placé et maintenu entre un disque d'extrémité (13) de l'enroulement et le fer (9) du stator.

8. Moteur électrique selon l'une des revendications précédentes,
caractérisé en ce que l'extrémité opposée au flasque de la paroi externe (8) du support (7) du palier présente une zone de diamètre plus faible (34) qui est peu étendue dans le sens axial.

9. Moteur électrique selon l'une des revendications précédentes, destiné à servir de moteur d'entraînement pour un ventilateur, en particulier un ventilateur axial de type plat, dont le boitier (40), le flasque de fixation (10), le support de palier (7) et les bras de liaison (45,46) sont en matière plastique,
caractérisé en ce que le moteur (1) est monté au centre d'un canal d'écoulement (43) du boîtier (40) avec une roue de ventilateur (41) fixée à son rotor.
